# DEMANDE DE BREVET EUROPEEN

(11) **EP 0 859 041 A1**
(43) Date de publication de la demande: **19.08.1998**
(21) Numéro de dépôt: 98400377.2
(22) Date de dépôt: 17.02.1998
(51) Int. Cl.: C10L 5/46, C10L 5/48

(54) **Produit combustible préparé à partir de déchets industriels et/ou ménagers et procédé de préparation d'un tel produit**

(30) Priorité: 17.02.1997 FR 9701823
(71) Demandeur: Falkenberg, Mathias, 4701 Kettenis-Eupen (BE); Falkenberg, Gunter, 4701 Kettenis-Eupen (BE)
(72) Inventeur: Falkenberg, Mathias, 4701 Kettenis-Eupen (BE); Falkenberg, Gunter, 4701 Kettenis-Eupen (BE)
(74) Mandataire: Desaix, Anne

(57) **Abrégé**

La présente invention propose un produit à capacité calorifique élevée, provenant d'un broyât de déchets industriels et/ou ménagers composé en majorité de matières plastiques, cartons, papiers et tissus, et pouvant être totalement consumé dans une période de temps suffisamment courte pour que l'ensemble des calories issues de sa combustion puisse être utilisé.

Le produit selon l'invention est compacté sous forme de "pellets" de densité sensiblement comprise entre 0,2 et 0,4. Un exemple de procédé de préparation d'un tel produit combustible consiste, après un premier broyage (41) et une séparation des matières métalliques (42), à opérer successivement : un criblage (23) pour fournir des fractions de déchets dont l'une, dite moyenne (25), présente une granulométrie moyenne, puis une séparation densimétrique (28) de la fraction moyenne (25) en deux fractions légère et lourde (29, 30), de densités respectivement inférieure et supérieure à une valeur de densité comprise entre environ 0,1 et 0,2, et un compactage de la fraction légère (29), par extrusion calibrée pour fournir un produit dont la densité est comprise entre 0,2 et 0,4.

Application à la récupération des déchets.

## Description

L'invention a pour objet un produit combustible, préparé à partir de déchets industriels et/ou ménagers, destiné à être utilisé en tant que substituant de combustion dans diverses industries telles que la sidérurgie, la cimenterie, les fours de production de chaux, la verrerie etc., ainsi que dans l'ensemble des industries utilisant des combustibles fossiles comme sources d'énergie calorifique. L'invention concerne également un procédé de préparation d'un tel produit combustible.

Les définitions de recherche, de développement et de mise en oeuvre de procédés pour la maîtrise des déchets, aussi neutres que possible vis-à-vis de l'environnement, ont été exposés à l'occasion de nombreuses conférences internationales (Rio, Bâle etc.). Par ailleurs, des textes réglementaires de plus en plus précis et contraignants relatifs à la protection de l'environnement, et notamment à la gestion des déchets, ont été adoptés par l'Union Européenne ainsi que par certains états membres. Parmi ces textes, la loi du 13 juillet 1992 dispose entre autres que les mises en décharge directes seront condamnées à l'horizon 2002, (exception faite des déchets ultimes) est appliquée en France. En outre, un arrêté de transcription en droit français de la directive européenne sur l'incinération des déchets (Directive 94/62/CE du 20 Décembre 1994) est également appliqué en France depuis le 10 Octobre 1996. De plus, d'un point de vue économique, il est actuellement reconnu que les ressources en combustibles fossiles (charbon, tourbe, pétrole) sont limitées, de même que les réserves en uranium. ll semble donc impératif de découvrir et de développer de nouvelles sources énergétiques.

Dans cette perspective, la mise au point d'un nouveau combustible, en particulier pour les gros consommateurs d'énergie, notamment les cimentiers, les chaufourniers, les verriers et les sidérurgistes, s'avère dès lors être un objectif majeur. Ce besoin de nouveaux combustibles, combiné à la nécessité de réduire le volume des stocks de déchets industriels et/ou ménagers, a incité les industriels à chercher des solutions consistant à valoriser ces déchets, par exemple en tant que produit combustible.

Néanmoins, les produits combustibles issus de la valorisation de tels déchets actuellement proposés sur le marché présentent des inconvénients majeurs. En effet, la plupart des produits disponibles sont issus de techniques qui génèrent des produits dont la capacité calorifique n'est pas entièrement utilisée. En fait, lorsqu'un tel produit est pulvérisé au sein d'une enceinte de combustion d'un appareil industriel, celui-ci retombe au fond de ladite enceinte avant qu'il n'ait été totalement consumé.

La présente invention remédie notamment à ce problème en proposant un produit à capacité calorifique élevée et qui présente l'intérêt d'être totalement consumé dans une période de temps suffisamment courte pour que l'ensemble des calories issues de sa combustion puisse être utilisé. Pour ce faire, les inventeurs ont en effet remarqué qu'un des paramètres critiques de la vitesse et de la capacité de combustion d'un tel produit réside dans l'intervalle de densité choisi.

Plus précisément, l'invention a pour objet un produit combustible provenant d'un broyât de déchets industriels et/ou ménagers, composé en majorité de matières plastiques, cartons, papiers et tissus, et essentiellement dépourvu de matières métalliques. Ce produit est compacté sous forme de "pellets" de densité sensiblement comprise entre 0,2 et 0,4.

Par ailleurs, pour optimiser la combustion, il est avantageux de tenir notamment compte des composants de la matière première constituant le produit. L'intervalle de densité selon la présente invention se prête, en outre, à la mise sous forme de pellets, c'est-à-dire sous forme d'éléments du type pastille, d'un broyât de déchets industriels et/ou ménagers.

De plus, dans la mesure où seulement un sixième du stock de déchets plastiques existant actuellement fait l'objet d'un recyclage proprement dit, la valorisation de tels déchets par la préparation du produit combustible selon l'invention autorise la transformation complète des déchets plastiques en énergie.

De préférence, un produit combustible selon la présente invention comprend une proportion de matières plastiques d'au moins 50%. Du fait que les matières plastiques, qui comprennent des films plastiques, des bouteilles, des gobelets ou des matières plastiques recouvrant des matières cartonnées etc., ont une capacité calorifique élevée par rapport aux autres constituants des déchets industriels et/ou ménagers, l'utilisation de telles proportions est avantageuse. En effet, la capacité calorifique des matières plastiques peut atteindre 9000 calories alors que celle des matières cellulosiques, de type papier ou carton, présentent une capacité calorifique de 4000 calories. En outre, la présence d'une forte majorité de telles matières plastiques est utile pour compacter efficacement les déchets.

En outre, un produit combustible préféré selon l'invention présente un taux de cendre pouvant se situer jusqu'à environ 40%. Le taux de cendre de la matière qui compose le produit de combustion selon l'invention est évalué à partir de la composition des matériaux initiaux et donc de leur provenance, identifiée par exemple par un centre de tri. Un taux de cendre de l'ordre de 40% peut être obtenu à partir de déchets contenant majoritairement des tapis et des matières textiles synthétiques. Les cendres se présentent alors principalement sous forme de chaux. La valeur du taux de cendre permet de déterminer la destination du produit de combustion obtenu.

Dans certaines utilisations, ce taux de cendre est aussi faible que possible et ne dépasse pas 5%. Par exemple lorsque le produit est utilisé en tant que substituant partiel des combustibles fossiles, tels que les charbons pulvérisés dans des chaudières classiques, en sidérurgie ou en verrerie, ou en tant que régulateur de combustion dans des installations d'incinération de déchets. D'autres industries acceptent ou recherchent un taux de cendre plus important, sans toutefois dépasser 40%. Ceci est notamment le cas lorsqu'un tel type de produit est utilisé en tant que produit de substitution dans des fours à haute température tels que les cimenteries ou les fours de production de chaux. En outre, ce taux de cendre, qui est fonction de la matière qui compose le produit selon l'invention, doit être déterminé pour connaître la destination préférentielle de ce dernier.

Par ailleurs, le produit de l'invention peut présenter des formes et des dimensions adaptées à leur utilisation, par exemple des parallélépipède, sans que ses propriétés, notamment sa capacité et sa vitesse de combustion, ne soient pas sensiblement altérées. Selon une réalisation préférée de l'invention, le produit combustible est de forme sensiblement cylindrique, son diamètre étant de préférence compris entre 8 et 16 mm et de préférence égal à environ 12 mm. De préférence encore, la longueur d'un tel produit est comprise entre 10 et 15 mm et de préférence égale à environ 12 mm.

Un produit présentant des dimensions de cet ordre est avantageusement utilisé lorsqu'il est introduit dans une enceinte de combustion industrielle. En effet, un produit combustible ne dispose alors que d'un temps réduit pour se consumer complètement. Or, une taille trop importante empêcherait une combustion totale du produit, ce qui nuirait à l'efficacité de l'opération de combustion. En outre, les dimensions ainsi que la forme du produit combustible facilitent sa production, son stockage et autorisent un transport aisé.

Un mode de réalisation du procédé de la présente invention concerne la préparation d'un tel produit combustible à partir de déchets industriels et/ou ménagers divers, composés en majorité de matières plastiques, cartons, papiers et tissus, qui sont soumis à un premier broyage, puis séparés des matières métalliques qu'ils pourraient contenir. Les différents déchets utilisables peuvent être classés en déchets contenant des produits dits "légers" ou "lourds".

Par déchets contenant des produits "légers", on entend définir des déchets contenant essentiellement des produits de type films plastiques, mélangés à du papier, du carton, des textiles, des tapis Par déchets contenant des produits "lourds", on entend définir des déchets contenant essentiellement des produits de type matières plastiques quelconques provenant d'industries, de centres de tri d'ordures ménagères ou de collectes sélectives, et dans lesquels ces matières plastiques sont plus rigides ou plus denses.

Ce procédé de traitement de déchets légers et lourds comprend, de plus, successivement les étapes suivantes :
- un deuxième broyage couplé à un criblage pour fournir des fractions de déchets dont l'une présente une granulométrie supérieure à environ 10 mm et ne dépassant pas 30 mm,
- une séparation densimétrique, par entraînement, de la fraction de granulométrie supérieure obtenue à l'étape précédente, en deux fractions de densités respectivement inférieure et supérieure à une densité d₀ comprise entre environ 0,1 et 0,2,
- un compactage de la fraction de densité inférieure, obtenue lors de l'étape précédente, par extrusion calibrée pour fournir un produit dont la densité est comprise entre 0,2 et 0,4.

Lors de la mise en oeuvre d'un tel procédé, on effectue un tri des déchets selon leur taille par criblage, puis selon leur densité, de sorte que les déchets amenés au compactage ne comprennent essentiellement que des éléments de taille et de densité déterminées.

De préférence, la fraction de granulométrie supérieure à 30 mm obtenue lors du criblage, est broyée pour récupérer une fraction de granulométrie voulue.

La fraction de densité supérieure à d₀, obtenue lors de la séparation densimétrique, fournit une fraction de granulométrie inférieure à 30 mm, directement utilisable en tant que "sous-produit" combustible non compacté ; ceci permet d'optimiser la valorisation des déchets de départ.

Dans un exemple de réalisation préféré du procédé selon l'invention, la séparation densimétrique est mise en oeuvre par application d'un flux d'air d'entraînement de la fraction de densité légère qui est ainsi déplacée et transportée de façon pneumatique.

L'étape de compactage dit de pelletisation de la fraction de densité inférieure à d₀ conduit à la production de pellets. Cette étape comprend l'introduction de cette fraction dans une filière classique à trous, dont le diamètre varie entre 8 et 16 mm, de préférence une filière dont le diamètre est environ égal à 12 mm, et dont l'épaisseur est d'environ 70 mm. Une telle filière permet le compactage proprement dit du produit selon la densité et le diamètre voulus. Le produit issu en continu de la filière est ensuite sectionné pour obtenir des pellets.

La densité finale du produit combustible obtenu est principalement déterminée par le diamètre des trous de la filière utilisée, ainsi que par l'épaisseur de cette dernière. La vitesse de rotation des rotors d'introduction conditionne la valeur de débit obtenue.

Un autre mode réalisation du procédé de préparation selon la présente invention comprend la préparation d'un produit combustible compact à partir des déchets industriels et/ou ménagers dits "légers". Dans un tel procédé, les déchets sont soumis à un premier broyage, puis séparés des matières métalliques qu'ils pourraient contenir, et ensuite compactés par extrusion calibrée pour fournir un produit dont la densité est comprise entre 0,2 et 0,4.

De préférence, les déchets sont compactés par extrusion par l'intermédiaire d'une filière calibrée selon un diamètre compris entre environ 8 et 16 mm, de préférence une filière dont le diamètre est environ égal à 12 mm. Ainsi que précédemment évoqué pour les déchets avec des matériaux plastiques divers, c'est-à-dire contenant des produits "lourds" et "légers", le choix d'un tel diamètre de filière est fonction de la densité finale visée.

Les pellets obtenus par le procédé selon l'invention présentent un caractère friable et sont rapidement fragmentés, ce qui favorise la rapidité de leur combustion.

D'autres caractéristiques et avantages de l'invention apparaîtront à la lecture de la description détaillée qui suit, en référence aux figures annexées qui représentent, respectivement:
- la figure 1, une vue en perspective d'un pellet selon la présente invention;
- la figure 2, une représentation schématique d'un exemple de mise en oeuvre du procédé selon la présente invention.

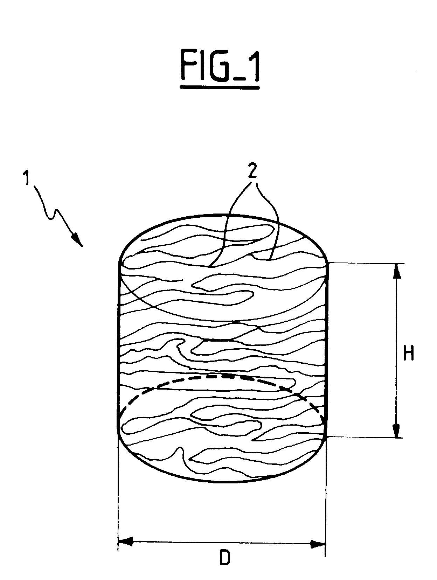

La figure 1 montre, en transparence, un pellet 1 formé d'éléments 2 qui constituent un enchevêtrement intime des matières d'un broyât initial, et qui confère au pellet 1 une densité sensiblement homogène, comprise selon l'invention entre 0,2 à 0,4.

Un tel pellet comprend des matières de nature plastique, présentes à plus de 50%, les matières restantes étant essentiellement constituées des divers types de déchets précédemment mentionnés (matières textiles, tapis) qui génèrent, après combustion du pellet, un pourcentage de chaux important pouvant être valorisé dans certaines industries (par exemple dans les cimenteries).

Par ailleurs, dans d'autres utilisations du produit de l'invention, notamment celles qui ne recyclent pas les cendres, le taux de matières plastiques est supérieur, par exemple supérieur à 70%. Un taux de matières plastiques d'au moins 95% permet l'obtention d'une proportion quasiment nulle de cendres après combustion, ce qui est expressément requis par certaines industries, par exemple celles qui utilisent des chaudières classiques.

Le pellet 1, tel qu'illustré sur la figure 1, est de forme sensiblement cylindrique avec une hauteur H et un diamètre D sensiblement égaux. Plus généralement, le pellet de l'invention peut présenter une forme géométrique différente, tout en restant de révolution autour d'un axe central XX, par exemple il peut présenter une section transversale carrée, rectangulaire ou de toute autre forme., avec ou sans corrélation entre hauteur et diamètre.

Par ailleurs, le pellet de l'invention perd rapidement sa forme géométrique en sortie de production, et se fragmente sous forme d'éléments de forme indéfinie, sans que la densité ne soit sensiblement modifiée du fait de son homogénéité. Une telle fragmentation offre l'avantage d'augmenter la vitesse de combustion du produit de l'invention.

En outre, la hauteur et le diamètre du pellet peuvent varier indépendamment pour être mieux adaptés à l'utilisation finale du produit. Plus particulièrement, le diamètre D d'un tel pellet est compris entre 8 et 16 mm, de préférence environ 12 mm et sa hauteur H est comprise entre 10 et 15 mm, de préférence environ 12 mm.

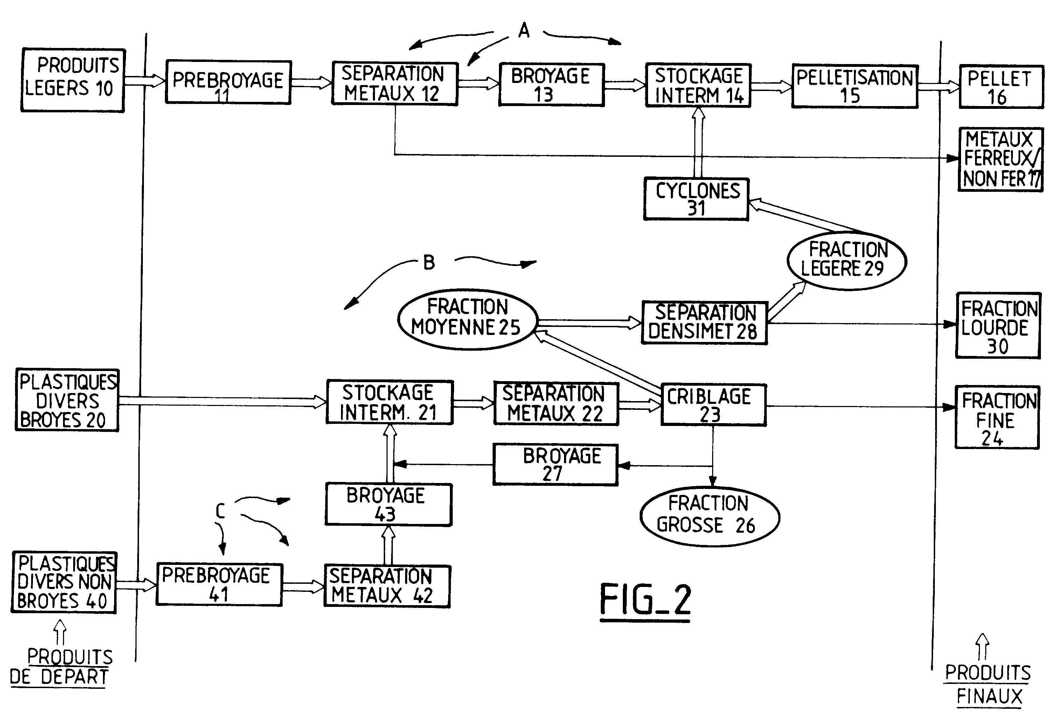

La figure 2 représente de manière schématique un exemple de réalisation d'un procédé de préparation de pellet, tel que représenté à la figure 1. Le procédé de préparation selon la présente invention peut être mis en oeuvre à partir de divers déchets industriels et/ou ménagers.

La diversité de ces déchets est plus particulièrement liée à la nature des produits plastiques qu'ils contiennent. De manière générale, deux possibilités sont envisagées selon que les déchets contiennent soit des produits divers "légers" et "lourds" soit des produits "légers" seuls. Par déchets contenant des produits "légers", on entend définir des déchets contenant essentiellement des produits de type films plastiques, mélangés à du papier, du carton, des textiles, des tapis. Par déchets contenant des produits "lourds", on entend définir des déchets contenant essentiellement des produits de type matières plastiques quelconques provenant d'industries, de centres de tri d'ordures ménagères ou de collectes sélectives, et dans lesquels ces matières plastiques sont plus rigides ou plus denses.

Dans la description qui suit, les déchets contenant les produits légers sont désignés sous la référence 10, ceux contenant les produits plastiques divers (légers et lourds) sont désignés par les références 20 et 40 selon qu'ils aient respectivement subi ou non une phase de pré-broyage. Les produits de départ 10, 20 et 40 sont traités selon le procédé de l'invention pour fournir des produits finaux 16, 17, 30 et 24, le procédé permettant de préparer les produits finaux utiles pour différents types d'industries ;prédéterminés.

Ainsi que le montre la figure 2, les déchets contenant les produits légers 10 suivent la ligne de traitement A suivante. Ils sont tout d'abord soumis à une phase de pré-broyage 11 suivie d'une phase de séparation des métaux 12. Cette phase de séparation est mise en oeuvre selon les techniques connues de l'homme du métier, par exemple par séparation magnétique. Les métaux retirés lors de cette phase de séparation 12 sont récupérés pour recyclage et séparation en métaux ferreux et métaux non ferreux 17.

Les déchets légers, prébroyés et séparés des matières métalliques, subissent ensuite une phase de broyage 13 pour les mettre en condition pour une étape de compactage particulier dit de "pelletisation" 15, qui permet d'obtenir les pellets tels que celui précédemment décrit. Cette étape est précédée d'une étape de stockage intermédiaire 14 afin de traiter des produits des lignes de traitement des plastiques divers 20 et 40. L'étape de pelletisation 15 est mise en oeuvre par introduction des produits provenant du stockage intermédiaire 14, dans une filière (non représentée) permettant la production de matériel compacté par extrusion. Les pellets obtenus sont alors recueillis et stockés pour leur utilisation finale 16 en fonction de leur composition, comme expliqué plus loin.

Dans la ligne de production A des pellets 16 à partir de produits légers 10, les étapes de pré-broyage 11, de séparation des métaux 12 et de broyage 13, sont effectuées par des techniques classiques connues de l'homme du métier. Dans l'étape de pelletisation 15, le diamètre de la filière est réglée en fonction du type ou de la provenance des produits légers de départ pour obtenir la densité désirée, c'est-à-dire comprise entre 0,2 et 0,4. Cette opération consistant à régler le diamètre de la filière est effectuée après calibrage, par exemple par mesure des densités obtenues sur des pellets à partir de différents types de produits légers, puis par augmentation ou diminution du diamètre de la filière selon que la densité est deçà ou au-delà de l'intervalle 0,2 à 0,4. On notera qu'un diamètre de filière trop faible peut entraîner la "fonte" du matériau lors de l'opération de pelletisation 15 proprement dite. On assisterait dès lors à un durcissement du produit final, ce qui nuirait à ses propriétés de combustion. Un diamètre de filière correct se situe entre 8 et 16 mm.

Tel que précédemment évoqué, le procédé de la présente invention s'applique également à des déchets contenant essentiellement des matières plastiques diverses, c'est-à-dire aussi bien à des déchets dits "légers" qu'à des déchets dits "lourds". La ligne de traitement de ces matières plastiques diverses débute différemment selon que ces matières ont été préalablement broyés (ligne de traitement B), ou non (ligne de traitement C).

Les matières plastiques préalablement broyées 20 subissent directement une étape de séparation des métaux 22. Elles sont stockées de manière intermédiaire 21 pour être combinées aux matières plastiques provenant de déchets contenant les matières plastiques diverses non broyées 40. Ces dernières sont soumises (ligne de traitement C) à une étape de pré-broyage 41, suivie d'une étape propre de séparation des métaux 42. Suite à la séparation des métaux 42, un deuxième broyage 43 est opéré et les produits résultants rejoignent les produits préalablement broyés 20 dans l'étape de stockage intermédiaire 21. Le traitement ultérieur des matières plastiques 20 et 40 suit ensuite une même ligne de traitement, qui débute par une étape de séparation de métaux 22.

Afin de permettre la pelletisation des produits provenant des matières plastiques diverses, il convient de sélectionner par criblage les produits aptes à subir le compactage. Ainsi, la séparation de métaux 22 est suivie d'une étape de criblage 23 permettant de fournir des fractions de déchets dites "fine" 24, "moyenne" 25 et "grosse" 26, selon la dimension des particules qui les composent. Ces dimensions sont respectivement définies par les intervalles suivants : 0 à 10 mm, 10 à 30 mm et supérieure à 30 mm.

La fraction fine 24 est ensuite séparée des deux autres fractions et est utilisée telle quelle, comme produit combustible non compacté. La fraction grosse 26 est recyclée. Elle subit un broyage 27 pour être ensuite soumise à la séparation de métaux 22 après le stockage intermédiaire 21 où elle rejoint la ligne de traitement des plastiques divers broyés 20.

La fraction moyenne 25 est destinée à la pelletisation par stockage intermédiaire dans la ligne de traitement des produits légers 10, après une étape de séparation densimétrique 28.

En effet, afin de sélectionner la matière propre à la pelletisation et d'obtenir un produit de composition et de densité voulues, la fraction moyenne 25 est soumise à une séparation densimétrique. La séparation densimétrique 28 est opérée par application d'un flux d'air d'entraînement, réglé de sorte à séparer des fractions de densité supérieure et inférieure à une valeur d₀ compris entre 0,1 et 0,2. La fraction de densité inférieure, dite fraction "légère" 29, est entraînée et transportée de manière pneumatique, tandis que la fraction de densité supérieure, dite fraction "lourde" 30, ne l'est pas. L'air de transport est ensuite séparé de la fraction légère par l'intermédiaire de cyclones 31.

La fraction lourde 30 est directement utilisable en tant que combustible pour certains types de fours, par exemple en cimenterie.

La fraction légère 29, destinée à la pelletisation, est donc composée d'éléments de dimension comprise entre 10 mm et 30 mm et de densité inférieure à une valeur comprise entre 0,1 et 0,2. Après le stockage intermédiaire 14, cette fraction est enfin soumise à l'étape de pelletisation 15, pour former les pellets 16 du type décrit ci-dessus.

Cette étape de pelletisation met en oeuvre une installation prévue pour des procédés d'extrusion, et comprend notamment des rotors permettant l'introduction du matériel à extruder. La densité du pellet qui est principalement fonction du diamètre et de la longueur de la filière, comme indiqué précédemment, peut légèrement varier selon la pression appliquée au matériel broyé au moment de son introduction dans la filière, et selon la vitesse de rotation des rotors de l'installation. L'homme du métier peut ajuster les valeurs de pression et de vitesse de la filière pour régler finement la valeur de la densité des pellets.

L'invention n'est pas limitée aux exemples décrits et représentés. Ainsi, la valeur de la densité limite entre les fractions légère et lourde peut être choisie dans l'intervalle variant entre 0,1 et 0,2. Dans l'opération consistant à entraîner la fraction de densité légère, le flux d'air est précalibré par l'homme du métier, par exemple par augmentation ou diminution selon que la densité de ladite fraction est en deçà ou au-delà de l'intervalle de densité variant entre 0,1 et 0,2. La séparation densimétrique peut également être conduite par tout autre moyen connu de l'homme de l'art, par exemple par centrifugation.

Par ailleurs, les stockages intermédiaires sont facultatifs, et les lignes de traitement A, B et C des produits légers et des plastiques divers peuvent être conduits indépendamment. D'autre part, les étapes de séparation de métaux et de broyage intermédiaire peuvent être regroupés ou réduits en nombre.

De plus, on notera que certains métaux, notamment l'aluminium, peuvent subsister en de très faibles quantités dans le broyât suite à la séparation des métaux. Ceci peut constituer un avantage pour certaines utilisations du produit. Par exemple, dans la mesure où l'aluminium est un élément utile à la fabrication de clinker dans les cimenteries, ces dernières peuvent alors mettre à profit les cendres issues de la combustion d'un produit de l'invention qui contiendrait un tel métal.

## Revendications

1. Produit combustible provenant d'un broyât de déchets industriels et/ou ménagers, caractérisé en ce qu'il est en majorité composé de matières plastiques, cartons, papiers et tissus, en ce qu'il comprend au moins 50% de matières plastiques et est essentiellement dépourvu de matières métalliques, et en ce qu'il est compacté sous forme de pellets (1), de densité sensiblement homogène et comprise entre 0,2 et 0,4, constitués d'un enchevêtrement intime des matières composant ledit broyât.

2. Produit combustible selon la revendication 1, caractérisé en ce qu'il comprend au moins 95% de matières plastiques.

3. Produit combustible selon la revendication 1, caractérisé en ce qu'il présente un taux de cendres qui ne dépasse pas environ 40%.

4. Produit combustible selon l'une quelconque des revendications 1 à 3, caractérisé en ce qu'il se présente sous la forme de pellets (1) de forme sensiblement cylindrique (H, D).

5. Produit combustible selon la revendication 4, caractérisé en ce que son diamètre (D) est sensiblement compris entre 8 et 16 mm.

6. Produit combustible selon la revendication 5, caractérisé en ce que son diamètre (D) est sensiblement égal à 12 mm.

7. Produit combustible selon l'une quelconque des revendications 3 à 6, caractérisé en ce que sa hauteur (H) est sensiblement comprise entre 8 et 16 mm.

8. Produit combustible selon la revendication 7, caractérisé en ce que sa hauteur est sensiblement égale à 12 mm.

9. Procédé pour la préparation d'un produit combustible selon l'une quelconque des revendications 1 à 8, à partir de déchets industriels et/ou ménagers en majorité composés de matières plastiques, cartons, papiers et tissus, caractérisé en ce que lesdits déchets sont soumis à un premier broyage (41) puis séparés des matières métalliques (42) qu'ils pourraient contenir, et en ce qu'il comprend successivement les étapes suivantes :
- un criblage (23) pour fournir des fractions de déchets dont l'une, dite moyenne (25), présente une granulométrie moyenne, supérieure à environ 10 mm sans dépasser environ 30 mm,
- une séparation densimétrique (28) de la fraction de granulométrie moyenne (25) obtenue à l'étape précédente, en deux fractions légère et lourde (29, 30) de densités respectivement inférieure et supérieure à une valeur de densité comprise entre environ 0,1 et 0,2,
- un compactage de la fraction légère (29), obtenue lors de l'étape précédente, par extrusion calibrée pour fournir un produit dont la densité est comprise entre 0,2 et 0,4.

10. Procédé selon la revendication 9, caractérisé en ce que la fraction grosse (26) de granulométrie supérieure, est broyée (27) pour fournir des produits de granulométrie inférieure à 30 mm.

11. Procédé selon la revendication 9 ou 10, caractérisé en ce que le compactage comprend l'introduction de la fraction légère (29) dans une filière dont le diamètre varie entre 8 et 16 mm.

12. Procédé selon la revendication 11, caractérisé en ce que le diamètre de la filière est d'environ 12 mm.

13. Procédé selon l'une quelconque des revendications 9 à 12, caractérisé en ce que, lors de la séparation densimétrique (28), la fraction légère est soumise à un transport pneumatique et en ce que l'air de transport est ensuite séparé de ladite fraction légère (29) avant le compactage (15).

14. Procédé pour la préparation d'un produit combustible à partir de déchets industriels ou ménagers, en majorité composés de matières plastiques dites légères, tel que des films plastiques, ainsi que de cartons, papiers et tissus caractérisé en ce que lesdits déchets sont soumis à un premier broyage (11), puis séparés des matières métalliques (12) qu'ils pourraient contenir, et ensuite pelletisés par extrusion (15) calibrée pour obtenir un produit (16 )dont la densité est comprise entre 0,2 et 0,4.

15. Utilisation d'un produit selon l'une quelconque des revendications 3 à 8, ayant un taux de cendre inférieur à environ 5 %, en tant que produit de substitution partielle des combustibles fossiles, tels que les charbons pulvérisés dans des chaudières classiques, en sidérurgie ou en verrerie, ou en tant que régulateurs de combustion dans des installations d'incinération de déchets.

16. Utilisation d'un produit selon l'une quelconque des revendications 3 à 8, ayant un taux de cendre compris entre 5 et 40 %, en tant que produit de substitution dans des fours à haute température, tels que les cimenteries ou les fours de production de chaux.
